(19) Europäisches Patentamt
European Patent Office
Office européen des brevets

(11) **EP 1 768 087 A1**

(12) **EUROPEAN PATENT APPLICATION**

(43) Date of publication:
**28.03.2007 Bulletin 2007/13**

(51) Int Cl.:
**G09G 3/20** (2006.01)

(21) Application number: **05291973.5**

(22) Date of filing: **22.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **DEUTSCHE THOMSON-BRANDT GMBH**
**78048 Villingen-Schwenningen (DE)**

(72) Inventors:
• **Thebault, Cédric**
  **92648 Boulogne Cedex (FR)**
• **Correa, Carlos**
  **92648 Boulogne Cedex (FR)**
• **Weitbruch, Sébastien**
  **92648 Boulogne Cedex (FR)**

(74) Representative: **Le Dantec, Claude**
**Thomson,**
**46, Quai Alphonse Le Gallo**
**92100 Boulogne-Billancourt (FR)**

(54) **Method and device for recursively encoding luminance values into subfield code words in a display device**

(57)    The invention relates to a method and a device for encoding the luminance value of a pixel of a picture into a subfield code word in a display device. It can be applied to every display device using a PWM (Pulse Width Modulation) technology and subfields for displaying video picture, e.g. in the display of video images using subfields. It can be used to compensate for any luminance problem that can be estimated. The general idea of the recursive coding is to encode one subfield after the other In order to be able to compensate for problems occurring of one subfield with the other subfields. More particularly, the bits of a subfield code word are computed recursively one after the other wherein after a comparison between the luminances of a pixels on a line and the threshold value of the first subfield, the load of a line for the subfield is then calculated and the result, multiplied by the weighting of the subfield, is subtracted from a luminance of each pixel to determine a remaining luminance. The defects (e.g. line load and/or linearity) in the light emission or luminance generated by a bit of the subfield code word are thus compensated by the following bits of the subfield code word.

FIG.5

**Description**

The invention relates to a method and a device for encoding the luminance value of a pixel of a picture into a subfield code word in a display device. It can be applied to every display device using a PWM (Pulse Width Modulation) technology and subfields for displaying video picture.

Background of the invention

The sub-field encoding part of a display using PWM technology is one of the most important parts of the display device since the encoding is responsible of the gray-scale portrayal (linearity and level of noise dithering) and of the motion rendition (level of false contour).

The goal of the sub-field encoding is to fill up a sub-fields memory with subfields data. The subfield data of a pixel is a code word wherein each bit is representative of the state, "ON" or "OFF", of this pixel during a subfield. This sub-fields memory will be read during the next frame, sub-field by sub-field, whereas it is written pixel by pixel. This information is used directly to control the display device.

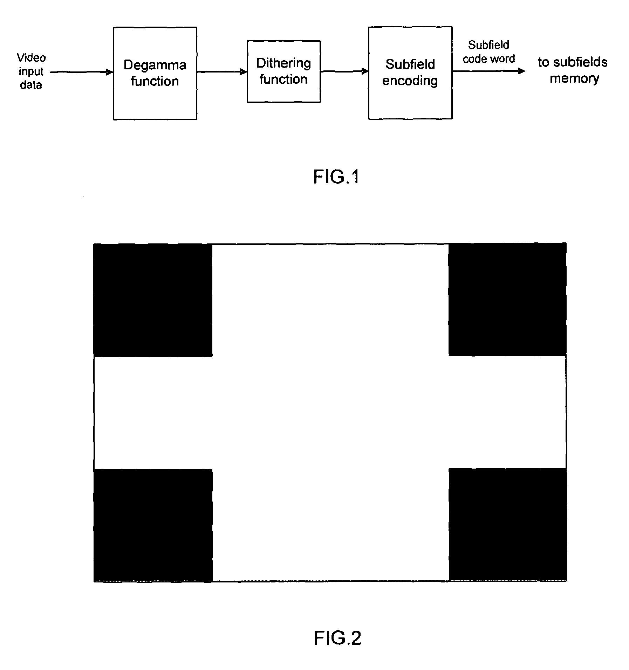

The subfield encoding step is generally done after a degamma function as shown in Figure 1. The degamma function is first applied to the input luminance values. These values are then coded by the sub-field encoding step into subfield code words. The subfield encoding step is eventually preceded by a dithering step. The subfield code words are then stored in a subfields memory.

In a standard approach, the encoding step is implemented by using a simple look-up table. A subfield code word is associated to each luminance value.

Some problems can not be solved at all or in a simple way when using this standard approach. This is the case of line load effect problem where the light emitted by a current pixel for a given luminance value can vary according to the load of the line of pixels to which the current pixel belongs. This problem can not be solved completely by using the standard approach. It is the same for the linearity problem when an average power level is controlled in the display device.

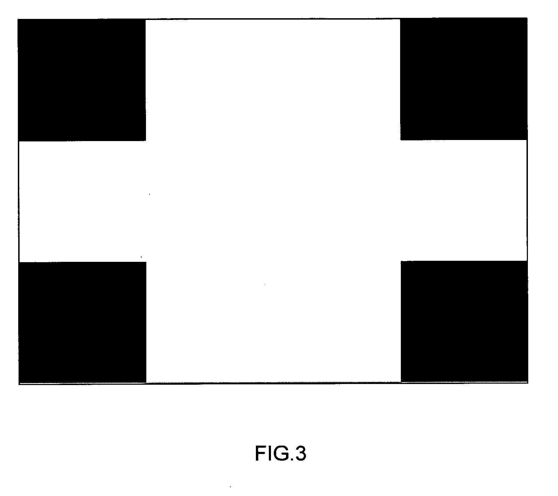

The line load effect is illustrated by figures 2 and 3. The figure 2 shows a test picture to be displayed by a display device suffering from a problem of line load effect. The first and the last lines are black on half of the pixels, and white on the other half. The middle lines are white. The figure 3 shows the picture displayed by the display device. The line load effect is visible on the middle lines. This effect can be explained as follows: when a sub-field is used on a whole line its luminance is decreased by 20% compared to its luminance on a line where it is not used. The value of 20% is given as an example. The luminance value of the pixels of the middle lines is thus $255 \cdot (1-(1-\frac{1}{2}) \times 0.20) = 229,5$ while the white pixels of the other lines have a luminance of 255. $(1- (1-1) \times 0.20) = 255$ .

Invention

It is an object of the present invention to disclose a subfield encoding method that can solve in a simple way any luminance problem and notably the line load effect problem.

So the invention concerns a method for encoding the luminance value of a pixel of a picture into a subfield code word in a display device, wherein each bit of the subfield code word has a state "ON" or "OFF" and generates light emission during an own period called subfield when its state is "ON", the light emitted for a pixel by its subfield code word being representative of the luminance value of said pixel and the total duration of the subfields associated to the bits of the subfield code word forming the picture frame.

According to the invention, the bits of each subfield code word are computed recursively one after the other such that the defects in the light emission generated by a bit of the subfield code word for said pixel is compensated by the following bits of the subfield code word.

Each subfield has a weight proportional to its duration. Preferably the bits of each subfield code word are computed recursively in the descending order of the weights of the corresponding subfields from the bit associated to the subfield having the most significant weight to the bit associated to the subfield having the least significant weight.

More particularly, each bit of the subfield code word of a current pixel is computed by :

-    for the bit associated to the subfield having the most significant weight, allocating a state "ON" to said bit if the luminance value of the current pixel is equal to or greater than a threshold value associated to said bit, and
-    for each following bit of the subfield code word, computing the remaining luminance value to be encoded by said bit and the following bits of the subfield code word and allocating a state "ON" to said bit if the remaining luminance value is equal to or greater than a threshold value associated to said bit.

The threshold value associated to a bit is equal to the sum of the weights of the subfields having a lower weight than the weight of the subfield corresponding to said bit plus one.

In a specific embodiment, the remaining luminance value to be encoded by a bit for a current pixel is computed as a function of the state of the pixels of the line of the display device to which the current pixel belongs.

For example, the remaining luminance value to be encoded by a current bit of the subfield code word of a current pixel is computed by :

- calculating, for the subfield, called preceding subfield, computed just before the subfield associated to said current bit, the number of pixels having the bit associated to said preceding subfield in a "ON" state in the line of pixels to which the current pixel belongs;
- estimating a subfield luminance value for said subfield on the basis of said number of pixels, and
- subtracting said subfield luminance value from the luminance value to be encoded by the bit associated to said preceding subfield and the following bits of the subfield code word.

The invention concerns also to a device for encoding the luminance value of a pixel of a picture into a subfield code word in a display device, wherein each bit of the subfield code word has a state "ON" or "OFF" and generates light emission during an own period called subfield when its state is "ON", the light emitted for a pixel by its subfield code word being representative of the luminance value of said pixel and the total duration of the subfields associated to the bits of the subfield code word forming the picture frame. According the invention, this device computes the bits of each subfield code word recursively one after the other such that the defects in the light emission generated by a bit of the subfield code word for said pixel is compensated by the following bits of the subfield code word.

It computes the bits of each subfield code word recursively in the descending order of the weights of the corresponding subfields from the bit associated to the subfield having the most significant weight to the bit associated to the subfield having the least significant weight.

According to a particular embodiment, for computing each bit of the subfield code word of a current pixel, the device comprises:

- a comparator circuit for allocating a state "ON" to the bit associated to the subfield having the most significant weight if the luminance value of the current pixel is equal to or greater than a threshold value associated to said bit, and for allocating a state "ON" to said bit if the remaining luminance value to be encoded by said bit and the following bits of the subfield code word is equal to or greater than a threshold value associated to said bit, and
- a calculation circuit for calculating, for each bit of the subfield code word following the bit associated to the most significant weight subfield, the remaining luminance value to be encoded by said bit and the following bits of the subfield code word.

It further comprises a controller for outputting the threshold values associated to the different bits of the subfield code word.

Brief description of the drawings

Exemplary embodiments of the invention are illustrated in the drawings and are explained in more detail in the following description. In the drawings :

Fig. 1    is a schematic diagram showing the steps to be applied to luminance values of pixels to convert them into subfield code words,
Fig.2    is a test picture to be encoded with the inventive method;
Fig.3    illustrates the line load effect for the test picture of Fig.2,
Fig.4    is schematic diagram of a device implementing the inventive method,
Fig.5    is a more detailed schematic diagram of a device implementing the inventive method,
Fig.6    is a schematic diagram of a first part of the device of Fig.5 for generating the most significant bits of the subfield code word, and
Fig.7    is a schematic diagram of a second part of the device of Fig.5 for generating the other bits of the subfield code word.

DESCRIPTION OF PREFERRED EMBODIMENTS

Although the invention is described in reference to a display device suffering from a problem of line load effect when displaying some pictures, it can be used to compensate for any luminance problem that can be estimated.

The general idea of the recursive coding is to encode one sub-field after the other in order to be able to compensate for problems occurring on one sub-field with the other sub-fields. More particularly, the bits of a subfield code word are computed recursively one after the other such that the defects (e.g. line load and/or linearity) in the light emission or luminance generated by a bit of the subfield code word can be compensated by the following bits of the subfield code word. In a particular embodiment, the bits of each subfield code word will be computed recursively in the descending order of the weights of the corresponding subfields from the most significant bit (MSB) associated to the subfield having the most significant weight to the least significant bit (LSB) associated to the subfield having the least significant weight.

According to the invention, a state "1" (= "ON") is allocated to the MSB of a current pixel if the luminance value of this pixel is equal to or greater than a threshold associated to this bit (or to the corresponding subfield). For each following bit, a remaining luminance value to be encoded by said bit and the following bits is computed and a state "1" is allocated to said bit if the remaining luminance value is equal to or greater than a threshold value associated to said bit.

An example will be described with the following sub-field weights and the corresponding switching values :

| Subfield $SF_i$ | $SF_1$ | $SF_2$ | $SF_3$ | $SF_4$ | $SF_5$ | $SF_6$ | $SF_7$ | $SF_8$ | $SF_9$ | $SF_{10}$ |
|---|---|---|---|---|---|---|---|---|---|---|
| Weight $W_i$ | 1 | 2 | 4 | 7 | 12 | 19 | 29 | 42 | 59 | 80 |
| Switching value $SV_i$ | 1 | 2 | 4 | 8 | 15 | 27 | 46 | 75 | 117 | 176 |

The switching value $SV_i$ of a current subfield $SF_i$ (or of a bit of a subfield code word) is for example the sum of the weights $W_j$ of the subfields preceding said current subfields plus one :

$$SV_i = \left( \sum_{j=1}^{i-1} W_j \right) + 1$$

The remaining luminance value to be encoded by a current bit of a subfield code word of a current pixel can be computed by :

- estimating the luminance generated by the bit preceding the current bit and
- subtracting said luminance value from the luminance value to be encoded by the bit preceding the current bit and the bits following said preceding bit.

As each bit of a subfield code word refers to a particular subfield among the plurality of subfields of the video frame, we will use indifferently in the following specification the expressions "luminance of a bit" or "luminance of a subfield". The luminance of a bit for a current pixel is calculated on the basis of the number of pixels having the preceding bit in the state "1" in the line of pixels to which the current pixel belongs .

As explained previously, the luminance of a subfield can vary depending on the line load of the line of pixels to be displayed (number of pixels in a "ON" state in the considered line of pixels). So it is evaluated as soon as all required information is known. It can be evaluated at the end of the loading of the picture but in order to limit the time delay, it usually will be evaluated at the latest after each line. For a perfect display where the luminance of a sub-field on a pixel is only a function of the pixel itself and the luminance of the pixel can be evaluated directly, the luminance of the sub-field is roughly the same for all pixels of the picture. For a display where the luminance on a line is dependent on the load distribution on this line (e.g. line load effect), the luminance of a sub-field can only be evaluated when the sub-field has been encoded for the whole line.

According to the invention, the problem of line load effect is processed in a new way. Generally, the line-load effect is seen as a luminance loss on a line. Nevertheless it is equivalent to say that when a sub-field is used on a whole line its luminance is decreased by 20% in comparison to its luminance on a line where it is not used and to say that when the sub-field is not used on a line its luminance is increased by 25% compared to its luminance when it is used on the whole line. The reference luminance is different, but the effect is the same. Thus, in the figures 2 and 3, the luminance value of the pixels of the first and last lines is $255 \cdot (1 + (1 - \frac{1}{2}) \times 0.25) = 287$ while the white pixels of the middle lines have a luminance of $255 \cdot (1 + (1-1) \times 0.25) = 255$.

It has to be noted that since the luminance of each sub-field is evaluated, the linearity problem due to the APL control can also be compensated by the inventive method.

This inventive method will be better explained by means of an example using the sub-field weights and the switching values given in the previous table.

The recursive encoding method is done line by line and sub-field by sub-field. The goal is to determine for each pixel value an appropriate subfield code word. At the beginning of the method, the subfield code word of all the pixel values can be represented like this: X X X X X X X X X X.

First line : the luminance value of the white pixels (value to encode: 255) is encoded inXXXXXXXXXX;

First line : the luminance value of the black pixels (value to encode: 0) is encoded inXXXXXXXXX;
Middle line : the luminance value of the pixels (value to encode: 255) is encoded inXXXXXXXXX;
Last line : the luminance value of the white pixels (value to encode: 255) is encoded inXXXXXXXXX;
Last line : the luminance value of the black pixels (value to encode: 0) is encoded in X X X X X X X X X;

According to the invention, the bit of the subfield code word corresponding to the most significant subfield (10th subfield) is determined for all the pixels of the picture. On the first line and during the first recursive step (encoding of the bit related to the 10th sub-field) the white pixels, with an original luminance value of 255, will use the sub-field 10 since 255≥176 (switching value for the 10th subfield). Therefore, their subfield code word will be of the type of X X X X X X X X X 1. The black pixels will not use this sub-field since 0<176, so their subfield code word will be of the type of X X X X X X X X X 0.

Once this subfield code bit has been determined for this line, its load can be evaluated and its effective luminance can be estimated. In the example of figure 2, the load of this line for this sub-field is equal to ½ since one half of the pixels are white and use this sub-field, and the other half is black and so do not use this sub-field. The sub-field will be brighter than expected and its luminance on this line will be equal to: 80-(1+(1-½)×0.25)=90. For the pixels where this sub-field is used, the luminance of this sub-field is subtracted to the luminance value to encode. So at the end of the first recursive step for the first line, we have:

First line: the luminance value of the white pixels is encoded in X X X X X X X X X 1; the remaining value to encode is 165;
First line, the luminance value of the black pixels is encoded in X X X X X X X X X 0 ; the remaining value to encode is 0;

For the first line, the second recursive step corresponding to the encoding of the 9th sub-field (the most significant remaining sub-field) is carried out. The white pixels have now a luminance value of 165, so they will use the 9th sub-field since 165≥117. The black pixels will not use the 9th sub-field since 0<117. The load of this line for this sub-field is equal to ½. The effective luminance of the 9th sub-field for this first line is equal to: 59·(1+ (1-½) × 0.25) = 66 . So at the end of the second recursive step on the first line we have:

First line : the luminance value of the white pixels is encoded in X X X X X X X X 1 1 ; the remaining value to encode is 99 ;
First line : the luminance value of the black pixels is encoded in X X X X X X X 0 0 ; the remaining value to encode is 0 ;

For the first line, the third recursive step corresponding to the encoding of the 8th sub-field is then carried out. The white pixels will use the 8th sub-field since 99≥75. The effective luminance of this sub-field for the first line is equal to 42·(1+(1-½)×0.25)=47. So at the end of the third recursive step on the first line we have:

First line : the luminance value of the white pixels is encoded in X X X X X X 1 1 1 ; the remaining value to encode is 52 ;
First line : the luminance value of the black pixels is encoded in: X X X X X X 0 0 0 ; the remaining value to encode is 0 ;

For the first line, the fourth recursive step corresponding to the encoding of the 7th sub-field is then carried out. The white pixels will use the 7th sub-field since 52≥46. The effective luminance of this sub-field for the first line is equal to 29·(1+(1-½) × 0.25) = 33. So at the end of the fourth recursive step on the first line we have:

First line : the luminance value of the white pixels is encoded in X X X X X 1 1 1 1; the remaining value to encode is 19 ;
First line : the luminance value of the black pixels is encoded in X X X X X 0 0 0 0 ; the remaining value to encode is 0 ;

For the first line, the fifth recursive step corresponding to the encoding of the 6th sub-field is then carried out. The white pixels will not use the 6th sub-field since 19<27. So, the load of this line for this sub-field will be equal to 0. So the effective luminance of this sub-field for the first line is equal to 19·(1 + (1- 0)×0.25) = 24. So at the end of the fifth recursive step on the first line we have:

First line : the luminance value of the white pixels is encoded in X X X X X 0 1 1 1 1 ; the remaining value to encode is 19 ;
First line : the luminance value of the black pixels is encoded in X X X X X 0 0 0 0 0 ; the remaining value to encode is 0 ;

For the first line, the sixth recursive step corresponding to the encoding of the 5th sub-field is then carried out. The white pixels will use the 5th sub-field since 19≥15. The effective luminance of this sub-field for the first line is equal to 12-(1+(1-½)×0.25)=14. So at the end of the sixth recursive step on the first line we have:

First line : the luminance value of the white pixels is encoded in: X X X X 1 0 1 1 1 1 ; the remaining value to encode is 5 ;
First line : the luminance value of the black pixels is encoded in X X X X 0 0 0 0 0 0 ; the remaining value to encode is 0 ;

The first line will not use the 4th sub-field since its highest remaining value (5 which is the remaining value for the white pixels) is smaller than its switching value (8). So at the end of the seventh recursive step, we have

First line : the luminance value of the white pixels is encoded in X X X 0 1 0 1 1 1 1 ; the remaining value to encode is 5;
First line : the luminance value of the black pixels is encoded in X X X 0 0 0 0 0 0 0 ; the remaining value to encode is 0 ;

For the first line, the eighth recursive step corresponding to the encoding of the 3th sub-field is then carried out. The white pixels will use the 3rd sub-field since 5≥4. The luminance of this sub-field for the first line is equal to $4 \cdot (1 + (1-\frac{1}{2}) \times 0.25) = 4$. So at the end of the eighth recursive step, we have

First line : the luminance value of the white pixels is encoded in: X X 1 0 1 0 1 1 1 1 ; the remaining value to encode is 1 ;
First line, the luminance value of the black pixels is encoded in X X 0 0 0 0 0 0 0 0 ; the remaining value to encode is 0 ;

For the first line, the ninth recursive step corresponding to the encoding of the 2nd sub-field is then carried out. The white pixels will not use the 2nd sub-field. The luminance of this sub-field for the first line is equal to $2 \cdot (1 + (1- 0) \times 0.25) = 2$. So at the end of the ninth recursive step, we have

First line, the luminance value of the white pixels is encoded in X 0 1 0 1 0 1 1 1 1 ; the remaining value to encode is 1;
First line, the luminance value of the black pixels is encoded in X 0 0 0 0 0 0 0 0 0 ; the remaining value to encode is 0 ;

Finally, the tenth recursive step corresponding to the encoding of the 1st sub-field is then carried out. The white pixels will use the 1st sub-field since 1≥1. So at the end of the tenth recursive step, we have

First line, the luminance value of the white pixels is encoded in 1 0 1 0 1 0 1 1 1 1 ;
First line, the luminance value of the black pixels is encoded in 0 0 0 0 0 0 0 000.

The luminance value of the white pixels and black pixels of the other lines identical to the first line are encoded as defined for the first line.
For the middle lines, the first recursive step corresponding to the encoding of the 10th sub-field is carried out as follows. The pixels (all of them are white) use the 10th sub-field since 255≥176. The load of this line for this sub-field is equal to 1 since all pixels of this line use this sub-field. So the luminance of this sub-field for the middle lines is equal to the expected value $80 \cdot (1 + (1-1) \times 0.25) = 80$. So at the end of the first recursive step, we have

Middle line : the luminance value of the pixels is encoded in X X X X X X X X X 1 ; the remaining value to encode is 175 ;

At the end of the second recursive step (encoding of the 9th subfield) of the middle line, since 175≥117, we have :

Middle line : the luminance value of the pixels is encoded in X X X X X X X X 1 1 ; the remaining value to encode is 116;

At the end of the third recursive step (encoding of the 8th subfield) of the middle line, since 116≥75, we have :

Middle line : the luminance value of the pixels is encoded in X X X X X X X 1 1 1 ; the remaining value to encode is 74;

At the end of the fourth recursive step (encoding of the 7th subfield) of the middle line, since 74≥46, we have:

Middle line : the luminance value of the pixels is encoded in X X X X X X 1 1 1 1 ; the remaining value to encode is 45;

At the end of the fifth recursive step (encoding of the 6th subfield) of the middle line, since 45≥27, we have:

Middle line : the luminance value of the pixels is encoded in X X X X X 1 1 1 1 1 ; the remaining value to encode is 26;

At the end of the sixth recursive step (encoding of the 5th subfield) of the middle line, since 26≥15, we have:

Middle line : the luminance value of the pixels is encoded in X X X X 1 1 1 1 1 1 ; the remaining value to encode is 14;

At the end of the seventh recursive step (encoding of the 4th subfield) of the middle line, since 14≥8, we have:

Middle line : the luminance value of the pixels is encoded in X X X 1 1 1 1 1 1, the remaining value to encode is 7;

At the end of the eighth recursive step (encoding of the 3rd subfield) of the middle line, since 7≥4, we have:

Middle line: the luminance value of the pixels is encoded in X X 1 1 1 1 1 1 1 ; the remaining value to encode is 3;

At the end of the ninth recursive step (encoding of the 2nd subfield) of the middle line, since 3≥2, we have:

Middle line: the luminance value of the pixels is encoded in X 1 1 1 1 1 1 1 1 ; the remaining value to encode is 1;

At the end of the tenth recursive step (encoding of the 1st subfield) of the middle line, since 1≥1, we have :

Middle line: the luminance value of the pixels is encoded in 1 1 1 1 1 1 1 1 1

So finally we get for the whole picture:

First line : the luminance value of the white pixels is encoded in 1 0 1 0 1 0 1 1 1 1
First line : the luminance value of the black pixels is encoded in 0 0 0 0 0 0 0. 000
Middle line : the luminance value of the pixels is encoded in 1 1 1 1 1 1 1 1 1 1
Last line : the luminance value of the white pixels is encoded in 1 0 1 0 1 0 1 111
Last line : the luminance value of the black pixels is encoded in 0 0 0 0 0 0 0 000

It is possible to check that the load effect is not visible with this encoding. On the first and last lines, the white pixels have a sub-field weight sum of 227. But the used sub-fields have a load of 50% on these lines, so the luminance is equivalent to $227 \cdot (1+(1-\frac{1}{2}) \times 0.25) = 255$. And on the middle lines, the white pixels have a sub-field weight sum of 255. But since the used sub-fields have a load of 100% on these lines, the luminance is equal to the expected luminance (255). So no line load will be visible.

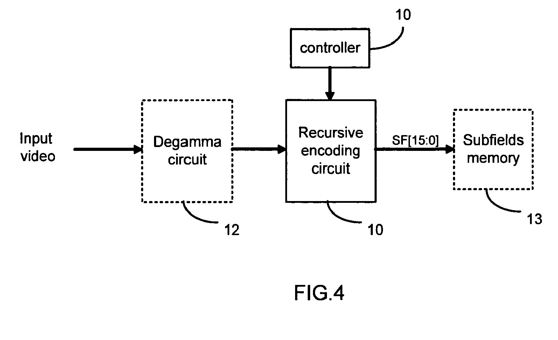

A device for implementing the inventive method is shown at figure 4. This device comprises a recursive encoding circuit 10 and a controller 11 for controlling said circuit. The recursive encoding circuit 10 receives video coming from a degamma circuit 12 and outputs subfield code words SF[15:0] in a subfields memory 13. In the example of figure 4, the circuit 10 applies also a dithering function to the data coming from a degamma circuit 12.

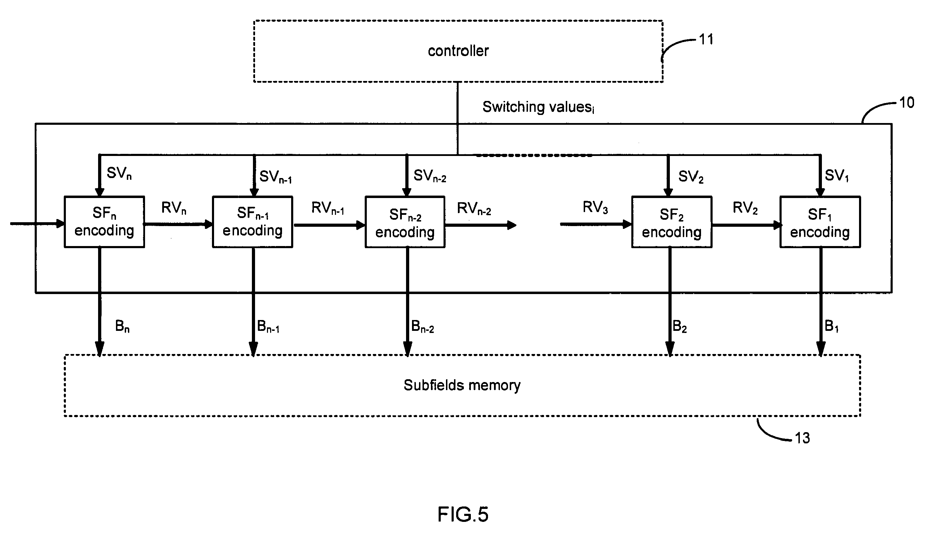

A schematic diagram of the recursive encoding circuit 10 is given at figure 5. It comprises n encoding blocks, one for each subfield (n being the number of subfield). In the following description, each subfield is denoted $SF_i$, i being the number of the subfield. $SF_n$ designates the subfield with the highest weight (also denoted most significant subfield) and $SF_1$ designates the subfield with the lowest weight (also denoted least significant subfield). Each encoding block receives from the controller 11 the switching value $SV_i$ associated to the subfield $SF_i$ that it encodes and a luminance value coming from the preceding encoding block or the degamma circuit and outputs a subfield code bit $B_i$ corresponding to the subfield $SF_i$ and a remaining luminance value $RV_i$ to be encoded by the following encoding blocks. The subfield code bit $B_i$ is stored in the subfields memory 13.

More particularly, the encoding block associated to the subfield $SF_n$ receives luminance value coming from the degamma circuit 12 and the switching value of the subfield $SF_n$ from the controller 11 and outputs a subfield code bit $B_n$ and the remaining luminance value $RV_n$ to be encoded by the following encoding blocks. The encoding block associated to the subfield $SF_i$, $i \in [2...n-1]$ receives the remaining luminance value $RV_i$ and the associated switching value $SV_i$ from the controller 11 and outputs the subfield code bit $B_i$ and the remaining luminance value $RV_i$ to be encoded by the following encoding blocks. The last encoding block associated to the subfield $SF_1$ receives the remaining luminance value $RV_2$ and the switching value $SV_1$ and outputs the subfield code bit $B_1$.

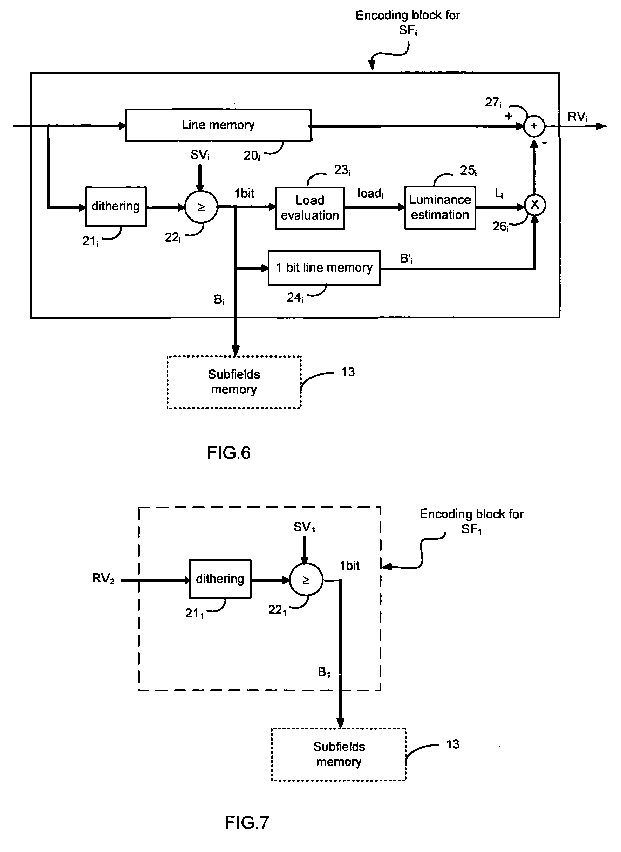

A possible schematic diagram of the encoding block associated to the subfield $SF_i$, $i \in [2...n]$, is shown at figure 6. It comprises :

- a line memory $20_i$ for storing the luminance values for a line of pixels coming from the degamma circuit 12 for the subfield $SF_n$ and the remaining values $RV_i$ for the subfields $SF_i$ with $i \in [2...n-1]$;
- a dithering block $21_i$ for applying a dithering function to said luminance values or remaining values $RV_i$,
- a comparison circuit $22_i$ for comparing the dithered luminance values to the switching value $SV_i$ and outputting a bit $B_i$ to "1" when said dithered luminance values are equal to or greater than $SV_i$, the bit $B_i$ being the subfield code bit that is stored in the subfields memory 13,
- a load evaluation circuit $23_i$ for computing the load $Load_i$ of the considered line for the subfield $SF_i$,

- a luminance estimation circuit $24_i$ for estimating the effective luminance $L_i$ of the subfield $SF_i$ for the considered line of pixels on the basis on the load values $Load_i$,
- a one bit line memory $25_i$ for delaying the bit $B_i$ of one line period, said delayed bit be denoted $B'_i$,
- a circuit $26_i$ for multiplying the bit $B'_i$ and the effective luminance $L_i$;
- a circuit $27_i$ for subtracting the output value of the multiplying circuit $26_i$ from the luminance value stored in the line memory $20_i$, the result value being the remaining value to be encoded by the following encoding blocks.

A possible schematic diagram of the encoding block associated to the subfield $SF_1$ is shown at figure 7. It comprises :

- a dithering block $21_1$ for applying a dithering function to the remaining value $RV_2$, and
- a comparison circuit $22_1$ for comparing the dithered luminance values to the switching value $SV_1$ and outputting a bit $B_1$ to "1" when said dithered luminance values are equal to or greater than $SV_1$, the bit $B_1$ being the subfield code bit that is stored in the subfields memory 13.

All these circuit diagrams are only given as examples of implementation. The different line memories of the device can be combined in one single memory. It can also comprise no dithering circuit.
(do not hesitate to add some other possible modifications of the device to show that figures 5 to 7 are only examples).

## Claims

1. Method for encoding the luminance value of a pixel of a picture into a subfield code word in a display device, wherein each bit of the subfield code word has a state "ON" or "OFF" and generates light emission during an own period called subfield when its state is "ON", the light emitted for a pixel by its subfield code word being representative of the luminance value of said pixel and the total duration of the subfields associated to the bits of the subfield code word forming the picture frame,
   **characterized in that** the bits of each subfield code word are computed recursively one after the other such that the defects in the light emission generated by a bit of the subfield code word for said pixel is compensated by the following bits of the subfield code word.

2. Method according to claim 1, **characterized in that** each subfield has a weight proportional to its duration and **in that** the bits of each subfield code word are computed recursively in the descending order of the weights of the corresponding subfields from the bit associated to the subfield having the most significant weight to the bit associated to the subfield having the least significant weight.

3. Method according to claim 2, **characterized in that** each bit of the subfield code word of a current pixel is computed by :

   - for the bit associated to the subfield having the most significant weight, allocating a state "ON" to said bit if the luminance value of the current pixel is equal to or greater than a threshold value associated to said bit, and
   - for each following bit of the subfield code word, computing the remaining luminance value to be encoded by said bit and the following bits of the subfield code word and allocating a state "ON" to said bit if the remaining luminance value is equal to or greater than a threshold value associated to said bit.

4. Method according to claim 3, **characterized in that** the threshold value (SVi) associated to a bit is equal to the sum of the weights of the subfields having a lower weight than the weight of the subfield corresponding to said bit plus one.

5. Method according to claim 3 or 4, **characterized in that** the remaining luminance value to be encoded by a bit for a current pixel is computed as a function of the state of the pixels of the line of the display device to which the current pixel belongs.

6. Method according to claim 5, **characterized in that** the remaining luminance value to be encoded by a current bit of the subfield code word of a current pixel is computed by :

   - calculating, for the subfield, called preceding subfield, computed just before the subfield associated to said current bit, the number of pixels having the bit associated to said preceding subfield in a "ON" state in the line of pixels to which the current pixel belongs;

- estimating a subfield luminance value for said subfield on the basis of said number of pixels, and
- subtracting said subfield luminance value from the luminance value to be encoded by the bit associated to said preceding subfield and the following bits of the subfield code word.

7. Device for encoding the luminance value of a pixel of a picture into a subfield code word in a display device, wherein each bit of the subfield code word has a state "ON" or "OFF" and generates light emission during an own period called subfield when its state is "ON", the light emitted for a pixel by its subfield code word being representative of the luminance value of said pixel and the total duration of the subfields associated to the bits of the subfield code word forming the picture frame,
**characterized in that** it computes the bits of each subfield code word recursively one after the other such that the defects in the light emission generated by a bit of the subfield code word for said pixel is compensated by the following bits of the subfield code word.

8. Device according to claim 7, **characterized in that** each subfield has a weight proportional to its duration and **in that** it computes the bits of each subfield code word recursively in the descending order of the weights of the corresponding subfields from the bit associated to the subfield having the most significant weight to the bit associated to the subfield having the least significant weight.

9. Device according to claim 8, **characterized in that**, for computing each bit of the subfield code word of a current pixel, it comprises:

- a comparator circuit ($22_i$) for allocating a state "ON" to the bit associated to the subfield having the most significant weight if the luminance value of the current pixel is equal to or greater than a threshold value associated to said bit, and for allocating a state "ON" to said bit if the remaining luminance value to be encoded by said bit and the following bits of the subfield code word is equal to or greater than a threshold value associated to said bit, and
- a calculation circuit ($23_i, 24_i, 25_i, 26_i, 27_i$) for calculating, for each bit of the subfield code word following the bit associated to the most significant weight subfield, the remaining luminance value to be encoded by said bit and the following bits of the subfield code word.

10. Device according to claim 9, **characterized in that** it further comprises a controller (11) for outputting the threshold values associated to the different bits of the subfield code word.

Video input data → [Degamma function] → [Dithering function] → [Subfield encoding] → Subfield code word → to subfields memory

FIG.1

FIG.2

FIG.3

10

controller

Input
video
→ Degamma
circuit → Recursive
encoding
circuit → SF[15:0] → Subfields
memory

12

10

13

FIG.4

FIG.5

Encoding block for
SF$_i$

FIG.6

Encoding block for
SF$_1$

FIG.7

**European Patent Office**

**EUROPEAN SEARCH REPORT**

Application Number

EP 05 29 1973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 973 147 A (MATSUSHITA ELECTRONICS CORPORATION) 19 January 2000 (2000-01-19) * page 19, paragraph 201 - page 21, paragraph 216; figures 36-43 * * page 29, paragraph 272 - page 30, paragraph 281; figures 57-59 * ----- | 1-3,7-10 | G09G3/20 |
| X | US 6 069 609 A (ISHIDA ET AL) 30 May 2000 (2000-05-30) * column 11, line 38 - column 14, line 25; figures 12-19 * ----- | 1,2,7-10 | |
| X | US 5 596 349 A (KOBAYASHI ET AL) 21 January 1997 (1997-01-21) * column 6, line 10 - column 7, line 40; figures 2,3 * * column 8, line 55 - column 10, line 48; figure 4 * ----- | 1,2,7,8 | |
| X | EP 0 822 536 A (FUJITSU LIMITED; MIKOSHIBA, SHIGEO) 4 February 1998 (1998-02-04) * page 9, line 22 - page 10, line 56; figures 12-14 * ----- | 1,2,7,8 | TECHNICAL FIELDS SEARCHED (IPC) G09G |
| A | US 6 100 859 A (KURIYAMA ET AL) 8 August 2000 (2000-08-08) * column 10, line 43 - column 10, line 67; figures 8,9 * * column 17, line 50 - column 20, line 24; figures 12,17-19 * * column 21, line 32 - column 24, line 53; figures 20-27 * ----- -/-- | 1-10 | |

The present search report has been drawn up for all claims

| Place of search | Date of completion of the search | Examiner |
|---|---|---|
| Munich | 17 February 2006 | Morris, D |

EPO FORM 1503 03.82 (P04C01)

**European Patent Office**

**EUROPEAN SEARCH REPORT**

Application Number

EP 05 29 1973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/059879 A (THOMSON LICENSING SA; WEITBRUCH, SEBASTIEN; THEBAULT, CEDRIC; CORREA,) 30 June 2005 (2005-06-30) * page 3, line 13 - page 5, line 18; figures 4,5 * * page 17, line 14 - page 18, line 14; figure 3 * * page 24, line 25 - page 27, line 14; figures 17,18 * ----- | 1-10 | |
| A | WO 2005/041162 A (THOMSON LICENSING SA; WEITBRUCH, SEBASTIEN; THEBAULT, CEDRIC; CORREA,) 6 May 2005 (2005-05-06) * page 9, line 18 - page 10, line 26; figures 8-10 * ----- | 5,6,10 | |

TECHNICAL FIELDS SEARCHED (IPC)

The present search report has been drawn up for all claims

| Place of search | Date of completion of the search | Examiner |
|---|---|---|
| Munich | 17 February 2006 | Morris, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 29 1973

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2006

| Patent document cited in search report | | Publication date | Patent family member(s) | | Publication date |
|---|---|---|---|---|---|
| EP 0973147 | A | 19-01-2000 | CN | 1253652 A | 17-05-2000 |
| | | | WO | 9844479 A1 | 08-10-1998 |
| | | | US | 6661470 B1 | 09-12-2003 |
| US 6069609 | A | 30-05-2000 | FR | 2733070 A1 | 18-10-1996 |
| | | | FR | 2752633 A1 | 27-02-1998 |
| | | | KR | 223079 B1 | 15-10-1999 |
| US 5596349 | A | 21-01-1997 | NONE | | |
| EP 0822536 | A | 04-02-1998 | JP | 3719783 B2 | 24-11-2005 |
| | | | JP | 10039828 A | 13-02-1998 |
| | | | US | 5907316 A | 25-05-1999 |
| US 6100859 | A | 08-08-2000 | FR | 2738377 A1 | 07-03-1997 |
| WO 2005059879 | A | 30-06-2005 | NONE | | |
| WO 2005041162 | A | 06-05-2005 | NONE | | |

EPO FORM P0459

For more details about this annex : see Official Journal of the European Patent Office, No. 12/82